(19) Europäisches Patentamt
European Patent Office
Office européen des brevets

(11) **EP 3 252 558 A1**

(12) **EUROPEAN PATENT APPLICATION**

(43) Date of publication:
06.12.2017 Bulletin 2017/49

(51) Int Cl.:
*G05D 1/00* (2006.01)   *B64C 39/02* (2006.01)

(21) Application number: 17174073.1

(22) Date of filing: 01.06.2017

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 03.06.2016 TW 105117589

(71) Applicant: **Baltek Co., Limited**
**Wanchai, Hongkong (CN)**

(72) Inventor: **LIAO, Tzu-Chuan**
**237 Sanxia Dist., New Taipei City 237 (TW)**

(74) Representative: **2K Patentanwälte Blasberg**
**Kewitz & Reichel**
**Partnerschaft mbB**
**Schumannstrasse 27**
**60325 Frankfurt am Main (DE)**

(54) **FOLLOWING REMOTE CONTROLLING METHOD FOR AIRCRAFT**

(57)   A following remote controlling method for aircraft is provided. The method includes following steps of: receiving a pointing operation which moves a remote control device (22) to face an expectant direction (E1, E2) at the remote controlling device (22); generating and sending a pointing signal to outside; receiving the pointing signal and moving toward the expectant direction (E1, E2) according to the pointing signal at an aircraft (20); and controlling the aircraft (20) to keep a following distance (D1-D6) from a target device (24) according to a target signal received from the target device (24) during moving. The present disclosed example can effectively reduce a probability of inputting erroneously operation via controlling the aircraft (20) by point operations.

start

| receive pointing operation at remote controlling device | S100 |

| generate pointing signal | S102 |

| send pointing signal | S104 |

| send target signal at target device | S106 |

| receive pointing signal and target signal at aircraft | S108 |

| move toward expectant direction | S110 |

| keep following distance from target device during moving | S112 |

end

**FIG.3**

## Description

BACKGROUND OF THE INVENTION

Field of the Invention

The technical field relates to aircraft and more particularly related to following remote controlling method for aircraft.

Description of Related Art

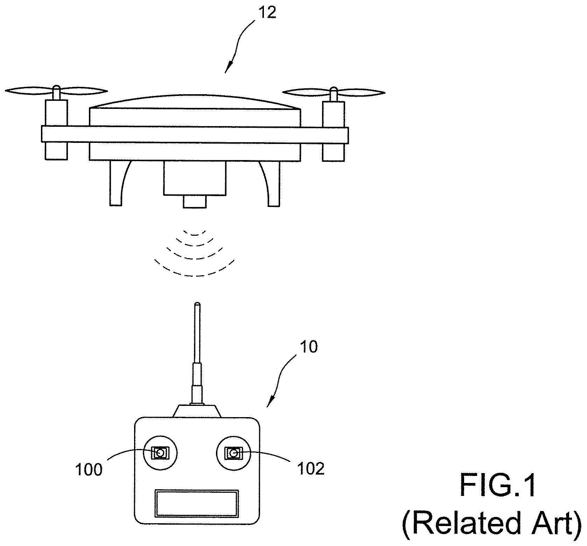

Please refer to Fig.1 which is an architecture diagram of an aircraft system according to the related art. As shown in Fig.1, all of the aircraft systems of the related art are configured to control aircraft 12 by operating a joystick 100-102 of a remote controller 10. More specifically, the user may operate the joystick 100 to control the aircraft 12 to move toward a designated direction, and may operate the joystick 102 to control the aircraft to front the designated direction.

Besides, a design principle of operating the remote controller 10 is to assume that the remote aircraft 12 is an axial origin. Above-mentioned design principle is not intuitive because the user must consider the direction in view of the aircraft 12 when operating the rocker 100-102.

Take selfie by the aircraft 12 arranged a camera for example, above-mentioned design principle will cause this situation that the direction in view of the aircraft 12 is opposite to the direction in view of the user (namely, left side of the aircraft 12 is equal to right side of the user) when the aircraft 12 fronts the user. The user must operate the joystick 100 left actually for controlling the aircraft 12 to move toward left side of the user if the user expects that the aircraft 12 moves toward right side of the user. Above-mentioned design principle will greatly increase a probability of inputting erroneously operation by user.

SUMMARY OF THE INVENTION

The present disclosed example is directed to a following remote controlling method for aircraft which controls an aircraft via configuring a user as an axial origin.

One of the exemplary embodiments, a following remote controlling method for aircraft, comprising: a) receiving a pointing operation at a remote controlling device, wherein the pointing operation is to move the remote control device to face an expectant direction; b) generating a pointing signal according to the pointing operation; c) sending the pointing signal to outside; d) receiving the pointing signal from the remote controlling device and a target signal from a target device at an aircraft; e) controlling the aircraft to move toward the expectant direction according to the pointing signal; and, f) controlling the aircraft to keep a following distance from the target device according to the target signal during moving.

The present disclosed example can effectively reduce a probability of inputting erroneously operation via controlling the aircraft by point operations.

BRIEF DESCRIPTION OF DRAWING

The features of the present disclosed example believed to be novel are set forth with particularity in the appended claims. The present disclosed example itself, however, may be best understood by reference to the following detailed description of the present disclosed example, which describes an exemplary embodiment of the present disclosed example, taken in conjunction with the accompanying drawings, in which:

Fig.1 which is an architecture diagram of an aircraft system according to the related art;
Fig.2 is an architecture diagram of an aircraft system according to the first embodiment of the present disclosed example;
Fig.3 is a flowchart of a following remote controlling method for aircraft according to the first embodiment of the present disclosed example;
Fig.4 is a schematic view of a pointing operation of the disclosed example;
Fig.5 is the first part of flowchart of a following remote controlling method for aircraft according to the second embodiment of the present disclosed example;
Fig.6 is the second part of flowchart of a following remote controlling method for aircraft according to the second embodiment of the present disclosed example;
Fig.7 is a schematic view of calculating a moving direction and a destination coordinate of the disclosed example;
Fig.8 is the first part of flowchart of a following remote controlling method for aircraft according to the third embodiment of the present disclosed example;
Fig.9 is the second part of flowchart of a following remote controlling method for aircraft according to the third embodiment of the present disclosed example;
Fig.10 is a partial flowchart of a following remote controlling method for aircraft according to the fourth embodiment of the present disclosed example;
Fig.11 is a partial flowchart of a following remote controlling method for aircraft according to the fifth embodiment of the present disclosed example;
Fig.12 is a partial flowchart of a following remote controlling method for aircraft according to the sixth embodiment of the present disclosed example;
Fig.13 is a schematic view of automatic steering of the disclosed example;
Fig.14 is a schematic view of moving an aircraft of the disclosed example;
Fig.15 is a flowchart of track-recording and track-following according to the seventh embodiment of the present disclosed example; and

Fig.16 is a flowchart of function operation according to the eighth embodiment of the present disclosed example.

DETAILED DESCRIPTION OF THE INVENTION

In cooperation with attached drawings, the technical contents and detailed description of the present disclosed example are described thereinafter according to a preferable embodiment, being not used to limit its executing scope. Any equivalent variation and modification made according to appended claims is all covered by the claims claimed by the present disclosed example.

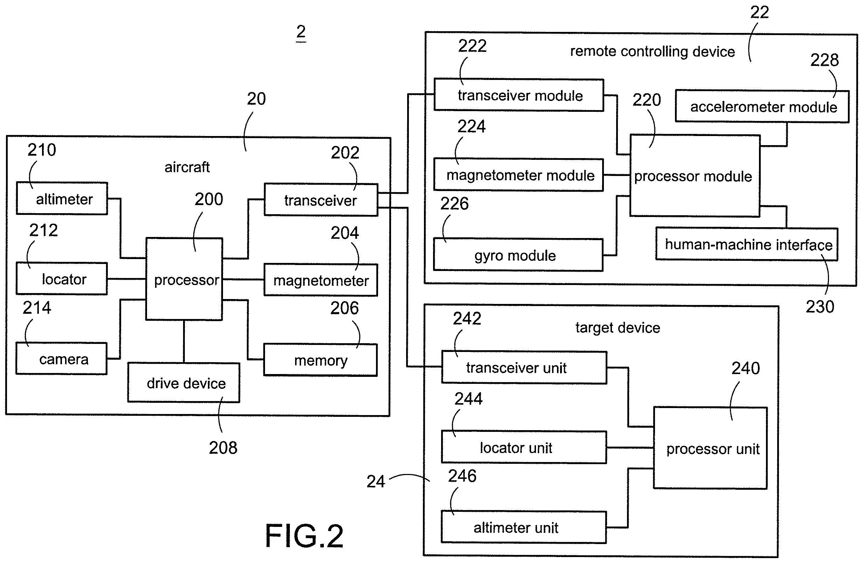

First, please refer to Fig.2, which is an architecture diagram of an aircraft system according to the first embodiment of the present disclosed example. The present disclosed example discloses a following remote controlling method for aircraft (the following remote controlling method as abbreviation) which is applied to an aircraft system 2 shown in Fig.2.

More specifically, the present disclosed example may make the user operate an aircraft 20 with pointing manner intuitively, and may make the aircraft 20 follow the user wearing a target device 24 automatically.

In the present disclosed example, the aircraft system 2 mainly comprises the aircraft 20 (such as steamboat, hot air balloon, rotorcraft or wing aircraft), a remote controlling device 22 and the target device 24.

The aircraft 20 comprises at least one transceiver 202, a magnetometer 204, a memory 206, a drive device 208, an altimeter 210, a locator 212, a camera 214 and a processor 200 electrically connected to above-mentioned elements. The memory 206 is used to store data. The drive device 208 is used to control the aircraft 20 to move or wheel around. The camera 214 is used to capture the images. The processor 200 is used to control the aircraft 20.

The remote controlling device 22 comprises a transceiver module, a magnetometer module, a gyro module 226, an accelerometer module 228, a human-machine interface 230 and a processor module 220 electrically connected to above-mentioned elements. The gyro module 226 (such as three-axis gyroscope) is used to detect at least one tilt angle of the remote controlling device 22. The accelerometer module 228 (such as triaxial accelerometer) is used to detect at least one motion acceleration of the remote controlling device 22. The human-machine interface 230 (such as knob, button, joystick, screen, speaker, indicator light or any combination of above elements.) is used to receive an operation from the user and/or feedback information to the user. The processor module 220 is used to control the remote controlling device 22.

Preferably, a shape of a casing of the remote controlling device 22 is designed for applying to one hand operation and one hand holding by user (such as a columnar casing or arranging a grip for one hand holding).

Thus, the user may point the remote controlling device 22 toward any direction smoothly for controlling the aircraft 20 move toward the designated pointing direction intuitively (described later).

The target device 24 comprises a transceiver unit 242, a locator unit 244, an altimeter unit 246 and a processor module 240 electrically connected to above-mentioned elements and used to control the target device 24.

Preferably, the target device 24 is worn by the user (the user wearing the target device 24 may be the same or different with the user holding the remote controlling device 22), and may send a special target signal to the aircraft 20 for making the aircraft 20 recognize a current position of the target device 24 (namely, the current position of the user) according to the target signal and follow the target device 24 automatically when detecting that the target device 24 moves (described later).

Next, the other elements will be described, the transceiver 202, the transceiver module 222, and the transceiver unit 242 (such as ultrasonic transceiver, radio frequency transceiver or infrared transceiver) are used to transmit the signal(s). The magnetometer 204 and the magnetometer module 224 (such as three-axis geomagnetism meter) are used to detect geomagnetic variation and generate a current azimuth angle of device. The altimeter 210 and the altimeter unit 246 (such as barometric altimeter, radar altimeter or ultrasonic altimeter) are used to detect a current altitude of device. The locator 212 and the locator unit 244 (such as the indoor positioning device using beacon technology or the device using Global Positioning System (GPS) technology) are used to retrieve a current coordinate of device.

Next, the following remote controlling method of each embodiment of the present disclosed example will be described. Please be noted that the following remote controlling method of each embodiment of the present disclosed example is implemented by the aircraft system 2 shown in Fig.2. Furthermore, the memory 206 stores a computer program. The computer program contains computer-executable program codes or machine codes used to implement aforementioned embodiments. When the processor 200 executes the computer-executable program codes or the machine codes, the processor 200 may control the aircraft 20 to interact with the remote controlling device 2 and the target device 24 for implementing each step of the following remote controlling method of the present disclosed example.

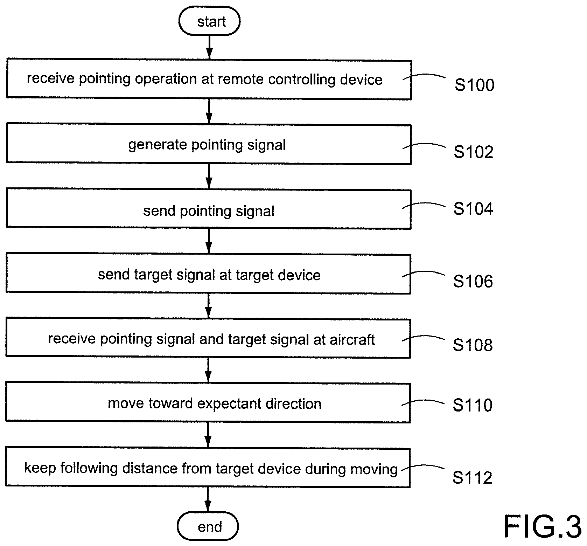

Please refer to Fig.3, which is a flowchart of a following remote controlling method for aircraft according to the first embodiment of the present disclosed example. The following remote controlling method of this embodiment comprises following steps.

Step S100: the remote controlling device 22 receives a pointing operation of the user. More specifically, the user may hold and point the remote controlling device 22 toward an expectant direction (namely, the user points the remote controlling device 22 toward a destination which the user wants the aircraft 20 arrive at) for completing the pointing operation.

Thus, the present disclosed example can make the user input the operation intuitively via assuming that the user is the axial origin.

Preferably, the human-machine interface 30 of the remote controlling device 22 may comprises a set of pointing operation button(s), the remote controlling device 22 receives the pointing operation when detecting that any pointing operation button is pressed.

The present disclosed example can effectively prevent the user from inputting the non-intended pointing operation via receiving the pointing operation during the pointing operation button being pressed.

Step S102: the remote controlling device 22 generates a pointing signal according to the received pointing operation. Preferably, the remote controlling device 22 may detect geomagnetic variation induced by the pointing operation via the magnetometer module 224, detect tilt variation induced by the pointing operation via the gyro module 226, and/or detect acceleration variation induced by the pointing operation via the accelerometer module 228. Then the remote controlling device 22 generates the pointing signal corresponding to the detected geomagnetic variation, tilt variation and/or acceleration variation.

Step S104: the remote controlling device 22 sends the generated pointing signal to outside via the transceiver module 222.

Step S106: the target device 24 sends the target signal. Preferably, the target signal is a signal based on time-domain (such as a space-domain signal including a specific frequency or wavelength or a signal including a sending time) or a signal including a position (such as the signal of GPS coordinate of the target device 24) of the target device 24.

Step S108: the processor 200 of the aircraft 20 receives the pointing signal sent by the remote controlling device 22 and the target signal sent by the target device 24 via transceiver 202.

Please be noted that the aircraft 20 may simultaneously use two types of different transmission technologies to respectively receive the pointing signal and the target signal.

For example, the transceiver module 222 of the remote controlling device 22 may be a radio frequency transceiver, and send the pointing signal in radio frequency form to outside. The transceiver unit 242 of the target device 24 may be an ultrasonic transceiver, and send the target signal in ultrasonic form to outside. The transceiver 202 of the aircraft 20 may comprises both a radio frequency transceiver and an ultrasonic transceiver, so as to receive the pointing signal in radio frequency form via the radio frequency transceiver and the target signal in ultrasonic form via the ultrasonic transceiver simultaneously.

Step S110: the processor 200 of the aircraft 20 decodes the received pointing signal, and controls the aircraft 20 to move toward the expectant direction via the drive device 208 according to the received pointing signal.

Preferably, the processor 200 determines a moving direction approaching towards the expectant direction according to the geomagnetic variation, tilt variation and/or acceleration variation instructed by the pointing signal, and controls the aircraft 20 to move toward the moving direction.

Step S108: the processor 200 controls the aircraft 20 to keep a default following distance (such as 5 meters) from target device 24 during the aircraft 20 moving every time.

More specifically, the processor 200 may calculate an actual distance between the aircraft 20 and the target device 24 continually according to the target signal, and make the actual distance be equal to the following distance via controlling the aircraft 20 to move continually.

Furthermore, the processor 200 may control the aircraft 20 to move for keeping the following distance from the target device 24 and following the user automatically when detecting that the target device 24 moves.

Preferably, the user may adjust above-mentioned following distance according to a purpose of the aircraft 20. For example, when using aircraft 20 for aerial photography, the user may adjust the following distance according to a focal length of the lens of camera 214, such as configuring the following distance as 1 meter when the focal length is 16 millimeters or configuring the following distance as 3 meters when the focal length is 50 millimeters, so as to capture with the ideal shooting range. In another example, when using aircraft 20 for loading the goods in the store, the user may adjust the following distance as 1 meter for making the user easy to place goods.

The present disclosed example can effectively reduce a probability of inputting erroneously operation via controlling the aircraft by point operations. Besides, the present disclosed can effectively make the aircraft follow the user automatically.

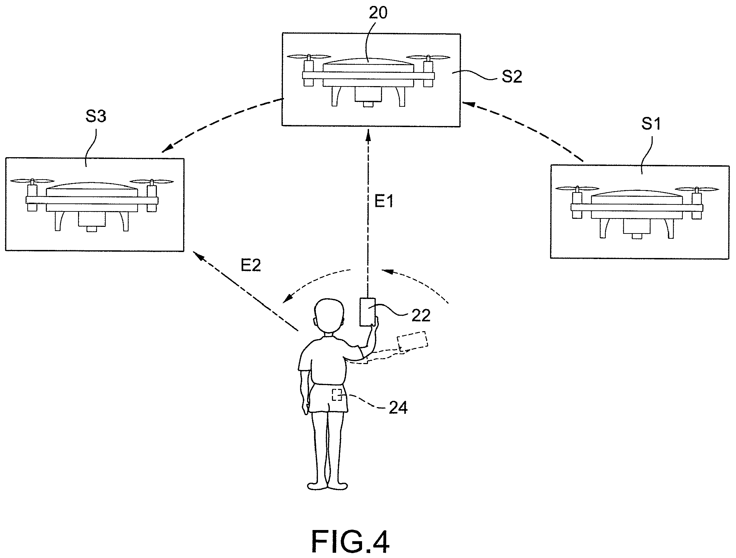

Please refer to Fig.4, which is a schematic view of a pointing operation of the disclosed example, Fig.4 is exemplified to explain how to control the aircraft via the pointing operation in the present disclosed example. As shown in Fig.4, the initial position of the aircraft 20 is position S1, and the aircraft 20 keeps the following distance (such as 3 meters) from the user wearing the target device 24.

The user may move the remote controlling device 22 to point the expectant direction E1 for completing the first time pointing operation. Then, the aircraft 20 executes the first time motion from the position S1 toward the user-designated expectant direction E1, and determines that the current position is in the expectant direction E1 and the actual distance between the aircraft 20 and the target device 24 is just equal to the following distance when moving to the position S2, and the aircraft 20 stops moving.

Then, the aircraft 20 may move the remote controlling device 22 to point the expectant direction E2 for completing the second time pointing operation. The aircraft 20 executes the second time motion from the position S2 toward the user-designated expectant direction E2 after completion of operation, and determines that the current position is in the expectant direction E2 and the actual distance between the aircraft 20 and the target device 24 is just equal to the following distance when moving to the position S3, and the aircraft 20 stops moving.

Thus, the user may operate the aircraft to move intuitively via assuming that the user is an axial origin.

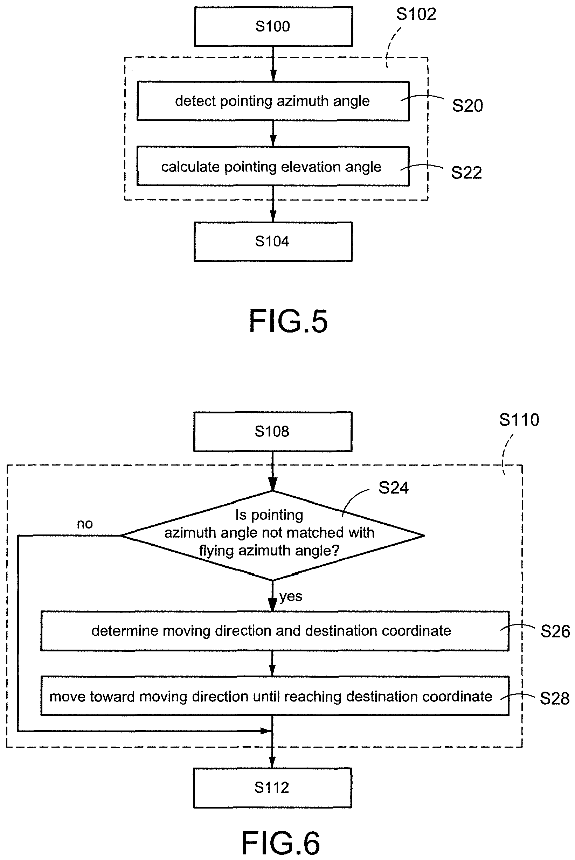

Please refer to Fig.3, Fig.5 and Fig.6 simultaneously, Fig.5 is the first part of flowchart of a following remote controlling method for aircraft according to the second embodiment of the present disclosed example, Fig.6 is the second part of flowchart of a following remote controlling method for aircraft according to the second embodiment of the present disclosed example. Compare to the first embodiment shown in Fig.3, in this embodiment, the step S102 comprises the steps S20, S22, and the step S110 comprises the steps S24-S28.

Step S20: the remote controlling device 22 detects a pointing azimuth angle corresponding to the expectant direction via the magnetometer module 224 when receiving the pointing operation, and adds the detected pointing azimuth angle into the pointing signal. More specifically, the pointing azimuth angle is a horizontal angle making a specific reference direction as a starting point (0 degrees) of angle.

For example, the pointing azimuth angle corresponding to the expectant direction is 50degrees if the reference direction is toward North and the expectant direction is 50 degrees toward North East. The pointing azimuth angle is 180 degrees if the reference direction is toward South.

The present disclosed example can clearly indicate the horizontal angle of the expectant direction via the pointing azimuth angle.

Step S22: the remote controlling device 22 calculates a vertical pointing elevation angle corresponding to the expectant direction when receiving the pointing operation, and adds the pointing elevation angle into the pointing signal.

Preferably, the remote controlling device 22 may detect a set of tilt angle(s) (such as three-axis tilt angles) of the remote controlling device 22 having received the pointing operation via the gyro module 226, and may calculate the pointing elevation angle according to a vertical composition (such as z-axis angle) of the tilt angle.

Or, the remote controlling device 22 may detect a set of moving vector(s) (such as three-axis moving vectors) of the remote controlling device 22 having received the pointing operation via the accelerometer module 228, and may calculate the pointing elevation angle according to a vertical composition (such as z-axis vector) of the moving vector.

In this embodiment, the step S110 comprises the steps S24-S28, the details are as follows.

Step S24: the processor 200 of the aircraft 20 retrieves a current flying azimuth angle of the aircraft 20 via the magnetometer 204 after receiving the pointing signal from the remote controlling device 22, and compares the flying azimuth angle with the pointing azimuth angle of the pointing signal.

If the flying azimuth angle is not matched with the pointing azimuth angle, the processor 20 may determine that the aircraft 20 is not in the expectant direction, and executes the step S26. If the flying azimuth angle is matched with the pointing azimuth angle, the processor 20 may determine that the aircraft 20 is in the expectant direction, and executes the step S112.

Step: S26: the processor 200 determines the moving direction according to the pointing azimuth angle and the flying azimuth angle.

Preferably, the processor 200 may determine a horizontal moving direction and a vertical moving direction according to the following distance, the pointing elevation angle and an azimuth angle difference between the pointing azimuth angle and the flying azimuth angle.

Furthermore, the processor 200 may determine a destination coordinate of this movement according to the following distance, the pointing elevation angle and the azimuth angle difference. More specifically, the processor 200 will configure the located three-dimensional space as a three-dimensional coordinate system, and calculate the destination coordinate via making the target device 24 as the origin (described later).

The step S28: the processor 200 controls the aircraft 20 to move toward the moving direction until reaching the destination coordinate.

Please be noted that although this embodiment is configured to calculate the moving direction by using both pointing azimuth angle and pointing elevation angle, but this specific example is not intended to limit the scope of the present disclosed example.

In another embodiment of the present disclosed example, the remote controlling device 22 may not retrieve the pointing elevation angle (namely, the step S22 will not be executed). Besides, in the step S26, the processor 200 determines the moving direction according to the pointing azimuth angle and the flying azimuth angle. In step S28, the processor 200 controls the aircraft 20 to move toward the expectant direction until the pointing azimuth angle is matched with the flying azimuth angle.

Furthermore, the step S26 is configured to determine the horizontal moving direction. Besides, in the step S28, the aircraft 20 keeps a default vertical following distance from the target device 24 until the pointing azimuth angle is matched with the flying azimuth angle. Thus, the aircraft 20 can move to the user-designated position correctly without retrieving the pointing elevation angle.

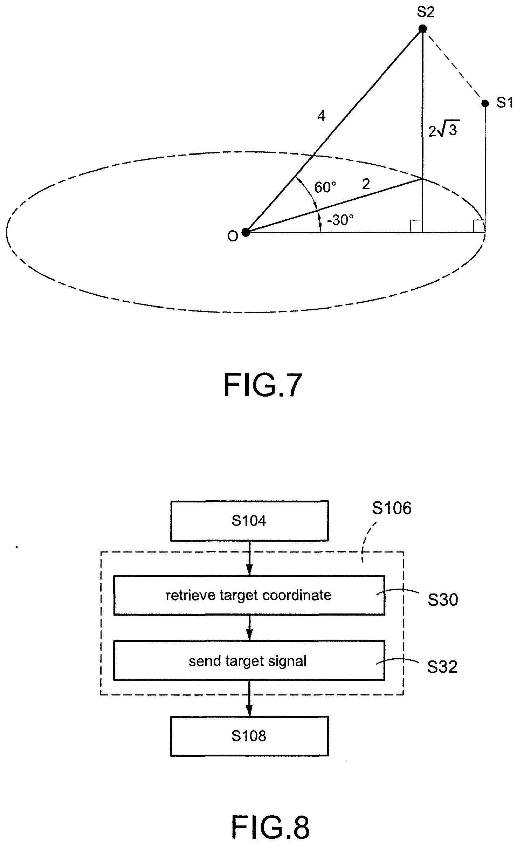

Fig.7 is a schematic view of calculating a moving direction and a destination coordinate of the disclosed example, Fig.7 are exemplified to explain a preferred manner of calculating the destination coordinate.

As shown in Fig.7, in this example, the azimuth angle difference between the pointing azimuth angle and the flying azimuth angle is -30 degrees, the pointing elevation angle is 60 degrees, the following distance is 4meters, and the initial position of the aircraft 20 is position S1.

Next, the description will explain how to calculate the coordinate (destination coordinate) of position S2. First, the processor 200 configures the located three-dimensional space as a three-dimensional coordinate system, and configures the position of the target device 24 as origin O corresponding to the coordinate (0,0,0). Then, the processor 200 may calculate the altitude of the position S2 valued $4 \times sin\, 60° = 2\sqrt{3}$ meters and being the Z-axis coordinate of the position S2. Then, the processor 200 may calculates the horizontal coordinates (namely, X-axis coordinate and Y-axis coordinate) of the position S2. The X-axis coordinate of the position S2 is $4 \times cos\, 60° sin\,(-30°) = -1$ meters, and the Y-axis coordinate of the position S2 is $4 \times cos\, 60° cos\,(-30°) = \sqrt{3}$ meters.

In summary, the processor 200 may determine that the coordinate of the position S2 is $(-1,\sqrt{3},2\sqrt{3})$.

Thus, the present disclosed example can effectively calculate destination coordinate without the Positioning system (such as GPS or indoor positioning system).

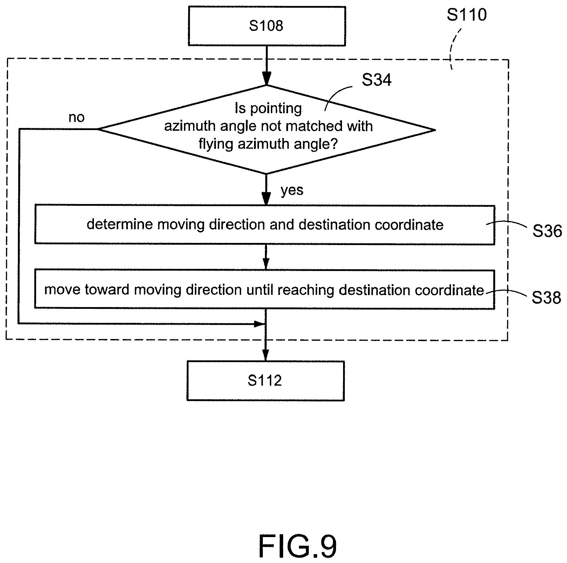

Please refer to the Fig.3, Fig. 8 and Fig.9 simultaneously, Fig.8 is the first part of flowchart of a following remote controlling method for aircraft according to the third embodiment of the present disclosed example, Fig.9 is the second part of flowchart of a following remote controlling method for aircraft according to the third embodiment of the present disclosed example. Compare to a first embodiment shown in Fig.3, the step S106 of this embodiment comprises the steps S30, S32, and the step S110 comprises the steps S34-S38.

Step S30: the target device 24 retrieves a target coordinate (such as GPS coordinate or beacon coordinate) via the locator unit 24, and adds the retrieved target coordinate into the target signal.

Step S32: the target device 24 sends the target signal to outside.

In this embodiment, the step S110 comprises the steps S34-S38 which are described in detail below.

Step S34: the processor 200 of the aircraft 20 retrieves the current flying azimuth angle via the magnetometer 204 after receiving the target signal and the pointing signal, and compared the flying azimuth angle with the pointing azimuth angle of the pointing signal.

If the pointing azimuth angle is not matched with the flying azimuth angle, the processor 200 executes the step S36. Otherwise, the processor 200 executes the step S112.

Step S36: the processor 200 retrieves the current flying coordinate via the locator 212, and determines the moving direction and the destination coordinate according to the target coordinate of the target signal, the pointing azimuth angle of the pointing signal, the current flying coordinate and the flying azimuth angle.

Preferably, the processor 200 determines the horizontal moving direction according to the azimuth angle difference between the pointing azimuth angle and the flying azimuth angle, and determines the vertical moving direction and the destination coordinate according to the target coordinate, the flying coordinate and the azimuth angle difference.

Step S38: the processor 200 controls the aircraft 20 to move toward the determined moving direction until reaching destination coordinate.

The present disclosed example can control the aircraft to move to the designated position accurately via positioning system (such as GPS or indoor positioning system).

Besides, via determining the moving direction according to both azimuth angle and coordinate, the present disclosed example can effectively prevent the target coordinate or the flying coordinate from error caused by signal-drifting, such that the calculated moving direction includes error.

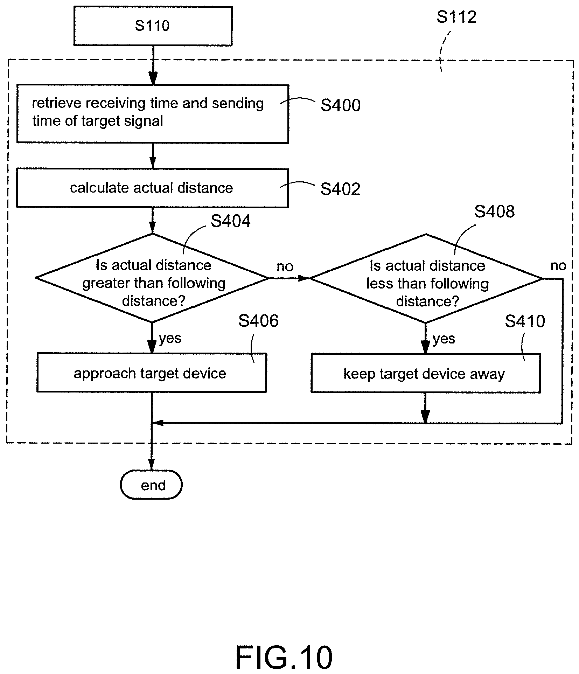

Next, following description will describe how the present disclosed example to implement the automatic follow function. Please refer to Fig.3 and Fig.10 simultaneously, Fig.10 is a partial flowchart of a following remote controlling method for aircraft according to the fourth embodiment of the present disclosed example. In this embodiment, the target signal may instruct a sending time (for example, the target signal may comprise the sending time, or the wavelength or frequency of the target signal may be fixed, so as to calculate the sending time according to the phase of the received target signal and the current time). Compare to the first embodiment shown in Fig.3, the step S112 of this embodiment comprises steps S400-S410.

Step S400: the processor 200 of the aircraft 20 retrieves the receiving time and the sending time of the target signal.

More specifically, the processor 200 makes the current time as the receiving time of this target signal and records when receiving the target signal (namely, the step S108 is executed) every time. Besides, the processor 200 may retrieve the sending time in the target signal.

Step S402: the processor 200 calculates the actual distance between the aircraft 20 and the target device 24 according to the receiving time, the sending time and a signal propagation velocity.

Take transmitting the target signal in ultrasound (the signal propagation velocity is 340 meters per second) form for example, the sending time is zero seconds, the receiving time is 0.01 seconds, the processor 200 may calculate the actual distance is (0.01-0)×340=3.4 meters.

Step S404: the processor 200 determines whether the actual distance is greater than the following distance. If the processor 200 determines that the actual distance is greater than the following distance, the processor 200 executes the step S406. Otherwise, the processor 200 executes the step S408.

Step S406: the processor 200 controls the aircraft 20 to approach the target device 24 for reducing the actual distance, so as to make the actual distance be matched with the following distance.

Step S408: the processor 200 determines whether the actual distance is less than the following distance. If the processor 200 determines that the actual distance is less than the following distance, the processor 200 executes the step S410. Otherwise, the processor 200 terminates the following remote controlling method.

Step S410: the processor 200 controls the aircraft 20 to keep the target device 24 away for increasing the actual distance, so as to make the actual distance be matched with the following distance.

Thus, the present disclosed example can make the aircraft 20 follow the target device 24 automatically, and keep the following distance from the target device 24.

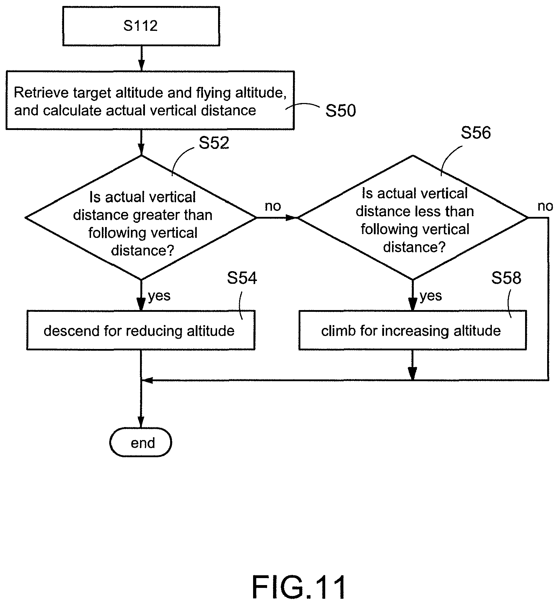

The present disclosed example further provides a The present invention also provides an altitude-following function having ability of making the aircraft 20 descend and climb automatically according to the altitude variation of the target device 24. Please refer to the Fig.3 and Fig.11 simultaneously, Fig.11 is a partial flowchart of a following remote controlling method for aircraft according to the fifth embodiment of the present disclosed example. In this embodiment, the target signal comprises a target altitude.

Preferably, the target device 24 may retrieve above target altitude via the altimeter unit 246 or retrieve above target altitude (such as the altitude of GPS coordinate) via the locator unit 244. Compare to the first embodiment shown in Fig.3, the following remote controlling method of this embodiment comprises steps S50-S58.

Step S50: the processor 200 retrieves the target altitude and a flying altitude, and calculates an actual vertical distance between the aircraft 20 and the target device 24 according to the target altitude and the flying altitude.

Preferably, the processor 200 retrieves the target altitude in the target signal. Besides, the processor 200 may detect the current flying altitude via the altimeter 210, or retrieve the current flying altitude via the locator212.

Step S52: the processor 200 determines whether the actual vertical distance is greater than the default following vertical distance. If the processor 200 determines that the actual vertical distance is greater than the following vertical distance, the processor 200 executes the step S54. Otherwise, the processor 200 executes the step S56.

Step S54: the processor 200 controls the aircraft 20 to descend for reducing altitude, so as to making the actual vertical distance be matched with the following vertical distance.

Step S56: the processor 200 determines whether the actual vertical distance is less than the default following vertical distance. If the processor 200 determines that the actual vertical distance is less than the following vertical distance, the processor 200 executes the step S58. Otherwise, the processor 200 terminals the following remote controlling method.

Step S58: the processor 200 controls the aircraft 20 to climb for increasing altitude, so as to making the actual vertical distance be matched with the following vertical distance.

Thus, the present disclosed example can make the aircraft 20 keep the fixed following vertical distance from the target device 24.

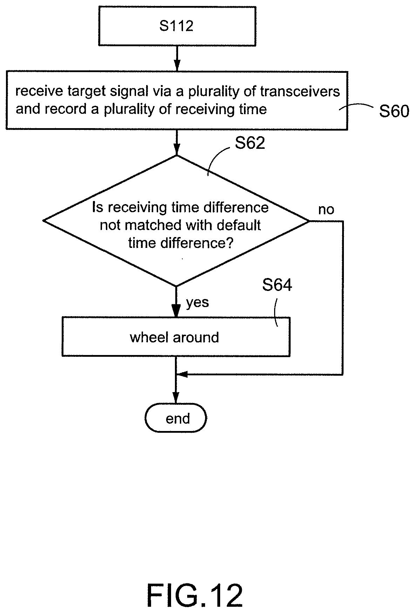

Please refer to the Fig.3 and Fig. 12 simultaneously, Fig.12 is a partial flowchart of a following remote controlling method for aircraft according to the sixth embodiment of the present disclosed example. The present disclosed example further provides an automatic wheel around function having ability of making the aircraft 20 front the target device 24. Besides, in this embodiment, the aircraft 20 comprises a plurality of the transceivers 202. Compare to the first embodiment shown in Fig.3, the following remote controlling method of this embodiment further comprises steps S60-S64.

Step S60: the processor 200 of the aircraft 20 receives the same target signal via the plurality of the transceivers 202, and records the receiving time of each transceiver 202 receiving the target signal.

Step S62: the processor 200 calculates a receiving time difference between the plurality of the receiving time, and determines whether the receiving time difference is matched with a default time difference (such as 0 second or less than 0.001 second).

If the processor 200 determines that the receiving time difference is not matched with the default time difference, the processor 200 executes the step S64. Otherwise, the processor 200 determines that the aircraft 20 has fronted the target device 24, and terminates the following remote controlling method.

Step S64: the processor 200 moves or wheels around (such as clockwise spin or counterclockwise spin) according to the receiving time difference for making the aircraft 22 face to the target device 24.

In one embodiment, above-mentioned automatic wheel around function is configured to make the front of the camera 214 face to the target device 24 automatically. More specifically, the aircraft 20 has been arranged an electric cradle head (such as PT head, not shown in figures) electrically connected to the processor 200, the camera 214 is arranged on the electric cradle head, the processor 200 may control the electric cradle head to pan or tilt to make the front of the camera 214 face to the different direction. Besides, the processor 200 may recognize an angle difference between the front of the aircraft 20 and the front of the camera 24. For example, the electric cradle head may be arranged an angle encoder, the processor 200 may retrieve the current rotation angle of the electric cradle head via the angle encoder, and calculate the angle difference between the front of the aircraft 20 and the front of the camera 214.

Besides, the aircraft 20 is mainly used to provide a selfie function, above-mentioned control "the front of the aircraft 20 fronts to the target device 24" could be appreciated that making the aircraft 20 move or wheel around for making the front of the aircraft 20 face to the target device 24, or could be appreciated that making the lens of the camera 214 arranged on the aircraft 20 front the target device 24 via panning or tilting the electric cradle head, but this specific example is not intended to limit the scope of the present disclosed example.

Furthermore, the operation of panning or tilting in the electric cradle head is independent with the operation of wheeling the aircraft 20, such as the processor 200 may control the aircraft 20 to stop wheeling or rotate a specific angle clockwise, and control the electric cradle head to pan a specific angle clockwise simultaneously.

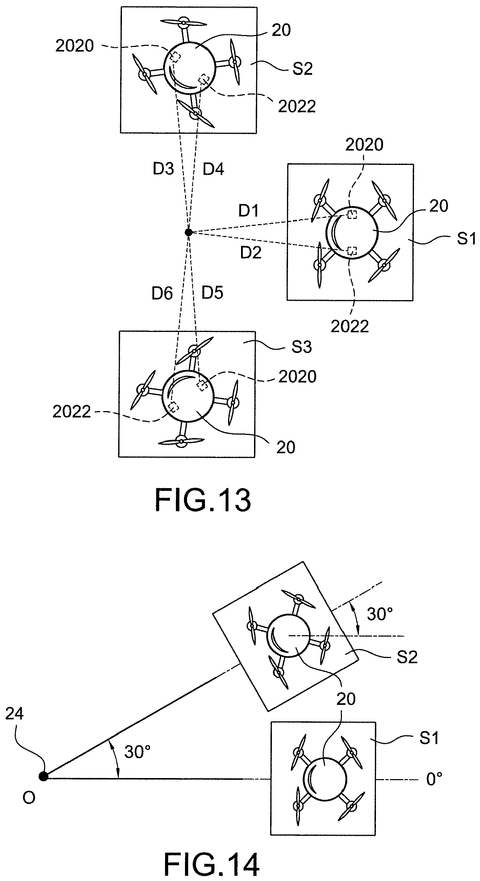

Please refer to Fig.13, which is a schematic view of automatic steering of the disclosed example. In this example, the aircraft 20 comprises two transceivers 2020, 2022. Besides, the two transceivers 2020, 2022 are respectively arranged on both sides of the aircraft 20.

As shown in Fig. 13, the aircraft 20 at position S1 fronts the target device 24. In this situation, a receiving time of the transceiver 2020 is the same as a receiving time of the transceiver 2022. Furthermore, the actual distance D1 which the aircraft 20 calculated according to the receiving time of the transceiver 2020 is also the same as the actual distance D2 which the aircraft 20 calculated according to the receiving time of the transceiver 2022.

The aircraft 20 at position S2 didn't front the target device 24. In this situation, the receiving time of the transceiver 2020 is greater than the receiving time of the transceiver 2022 (the distance between the transceiver 2022 and the target device 24 is shorter than the distance between the transceiver 2020 and the target device 24). Besides, the actual distance D3 which the aircraft 20 calculated according to the receiving time of the transceiver 2020 is greater than the actual distance D4 which the aircraft 20 calculated according to the receiving time of the transceiver 2022.

Besides, in this situation, the aircraft 20 may turn counterclockwise automatically until the actual distance D3 is the same as the actual distance D4 (namely, the aircraft 20 fronts the target device 24).

The aircraft 20 at position S3 didn't front the target device 24. In this situation, the receiving time of the transceiver 2020 is less than the receiving time of the transceiver 2022 (the distance between the transceiver 2022 and the target device 24 is longer than the distance between the transceiver 2020 and the target device 24).

Besides, the actual distance D5 which the aircraft 20 calculated according to the receiving time of the transceiver 2020 is less than the actual distance D6 which the aircraft 20 calculated according to the receiving time of the transceiver 2022.

Besides, in this situation, the aircraft 20 may turn clockwise automatically until the actual distance D5 is the same as the actual distance D6 (namely, the aircraft 20 fronts the target device 24).

Please refer to Fig.14, which is a schematic view of moving an aircraft of the disclosed example, Fig. 14 is used to describe how to determine whether the aircraft 20 had moved toward the expectant direction via the automatic wheel around function.

In this example, the magnetometer 204 is arranged on the aircraft 20 fixedly, above manner makes the magnetometer 204 may detect the geomagnetic variation (namely, detecting the corresponded azimuth angle) corresponding to the spin when the aircraft 20 spins.

Besides, in this example, the flying azimuth angle detected by the magnetometer 204 is 0 degrees when the aircraft 20 locates at position S1 and fronts the target device 24.

When the aircraft 20 moves to the position S2 and its front faces to the target device 24, the magnetometer 204 may detect that the flying azimuth angle had changed to 30 degrees (the aircraft 20 spun 30 degrees) because of the spin of the aircraft 20.

Furthermore, as shown in figure, the spin angle of the aircraft 20 (namely, flying azimuth angle) is the same as the circling angle of the aircraft 20 circling the target device 24 when the aircraft 20 fronts the target device 24.

Thus, it said that the aircraft 20 is in the expectant direction and could stop moving when the aircraft 20 moves continually until the flying azimuth angle is matched with the pointing azimuth angle (namely, the azimuth angle difference is equal to zero degrees).

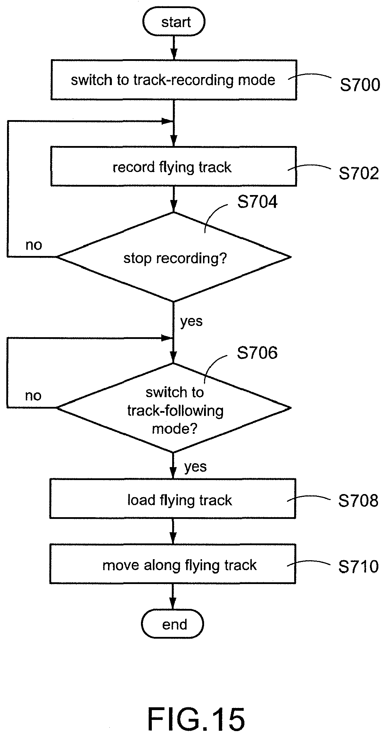

Please refer to Fig. 15, which is a flowchart of track-recording and track-following according to the seventh embodiment of the present disclosed example. This embodiment provides a track-recording function and a track-following function having ability of recording a flying track of aircraft 20 and controlling the aircraft 20 to cruise automatically according to the recorded flying track. Compare to the first embodiment shown in Fig.3, the following remote controlling method of this embodiment further comprises following steps for implementing the track-recording function and the track-following function.

Step S700: the processor 200 of the aircraft 20 switches to the track-recording mode. Preferably, the human-machine interface 230 of the remote controlling device 22 further comprises a track-recording button. The remote controlling device 22 may generate and send a track-recording signal to the aircraft 20 for making the processor 200 switch to the track-recording mode when the track-recording button is pressed.

Step S702: the processor 200 records the flying track of the aircraft 20 based on time-domain in the track-recording mode.

Preferably, the processor 200 records all of the received pointing signals (each pointing signal may comprises pointing elevation angle, pointing azimuth angle and following distance) sent by the remote controlling device 22 for generating the flying track.

Preferably, the processor 200 records the control parameters (such as spin angle, moving altitude and moving distance) used to control the drive device 208 to move every time for generating the flying track.

Preferably, the processor 200 configures the located three-dimensional space as a three-dimensional coordinate system, and records the coordinate variation of the aircraft 20 in three-dimensional space for generating the flying track.

Step S704: the processor 200 determines whether the processor 200 may stop recording the flying track.

Preferably, the human-machine interface 230 of the remote controlling device 22 further comprises a button of stopping recording track. The remote controlling device 22 may generate and send signal of stopping recording track to the aircraft 20 for making the processor 200 store the recorded flying track (such as exporting as a track file) in the memory 206 and leave the track-recording mode when above button of stopping recording track is pressed.

If the processor 200 determines that the processor 200 may stop recording the flying track, the processor 200 executes step S706. Otherwise, the processor 200 executes the step S702.

Step S706: the processor 200 switches to the track-following mode. Preferably, the human-machine interface 230 of the remote controlling device 22 further comprises a track-following button. The remote controlling device 22 may generate and send a track-following signal to the aircraft 20 for making the processor 200 switch to the track-following mode when above-mentioned track-following button is pressed.

Step S708: the processor 200 loads the flying track stored in the memory 206 in advance in the track-following mode.

Step S710: the processor 200 controls the aircraft 20 to move along the loaded flying track.

The present disclosed example can make the aircraft 20 cruise automatically according to the pre-planned flying track.

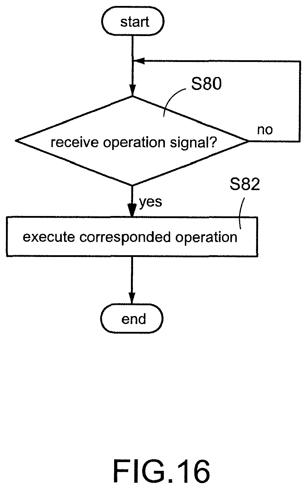

Please refer to Fig.16, which is a flowchart of function operation according to the eighth embodiment of the present disclosed example. This embodiment provides a plurality of operation functions. Compare to the first embodiment shown in Fig.3, the following remote controlling method of this embodiment further comprises following steps for implementing the plurality of the operation functions.

Step S80: the processor 200 of the aircraft 20 receives the operation signal sent from the remote controlling device 22.

More specifically, the human-machine interface 230 of the remote controlling device 22 further comprises various operation buttons. The remote controlling device 22 may generate and send the corresponded operation signal to the aircraft 20 when each operation button is pressed.

For example, the human-machine interface 230 may comprise a plane-fixed operation button, a fine-tuning operation knob, a distance-adjusting knob and a recording on/off button.

The remote controlling device 22 may generate and send a plane-fixed operation signal to outside when the plane-fixed operation button is pressed. The remote controlling device 22 may generate and send a fine-tuning operation signal comprising a fine-tuning direction and a fine-tuning distance to outside when the fine-tuning operation knob is turned. The remote controlling device 22 may generate and send a distance-adjusting signal corresponding to the operation to outside when the distance-adjusting knob is turned. The remote controlling device 22 may generate and send a recording signal to outside when the recording on/off button is pressed first time, and may generate and send a stopping recording signal to outside when the recording on/off button is pressed again.

Step S82: processor 200 executes the corresponded operation according to the received operation signal. For example, the processor 200 may determine a plane corresponding to the expectant direction when receiving the plane-fixed operation signal from the remote controlling device 22, and configure the plane as a movable range of the aircraft 20 for making the aircraft 20 limited to moving in the plane.

The processor 200 may control the aircraft 20 to move the fine-tuning distance bias toward the fine-tuning direction (such as moving 30 centimeters toward left or descending 50 centimeters toward down) according to the fine-tuning operation signal when receiving the fine-tuning operation signal from the remote controlling device 22.

The processor 200 may adjust value of the following distance (such as increasing the following distance or decreasing the following distance) according to the distance-adjusting signal when receiving the distance-adjusting signal from the remote controlling device 22.

The processor 200 may control the camera 214 of the aircraft 20 to start to record video. Besides, the processor 200 may further start to record the flying track of the aircraft 20 based on time.

The processor 200 may control the camera 214 to stop recording video. Besides, the processor 200 may further stop recording the flying track of the aircraft 20 when determining that the processor 200 is still recording the flying track.

**Claims**

1. A following remote controlling method for aircraft, comprising:

   a) receiving a pointing operation at a remote controlling device (22), wherein the pointing operation is to move the remote control device (22) to face an expectant direction (E1, E2);
   b) generating a pointing signal according to the pointing operation;
   c) sending the pointing signal to outside;
   d) receiving the pointing signal from the remote controlling device (22) and a target signal from a target device (24) at an aircraft (20);
   e) controlling the aircraft (20) to move toward the expectant direction (E1, E2) according to the pointing signal; and
   f) controlling the aircraft (20) to keep a following distance (D1-D6) from the target device (24) according to the target signal during moving.

2. The following remote controlling method for aircraft according to claim 1, wherein the pointing signal comprises a pointing azimuth angle;

   the step b) comprises a step b1) detecting the pointing azimuth angle via a magnetometer module (224) of the remote controlling device (22);
   the step e) comprises:

   e1) determining a moving direction according to the pointing azimuth angle and a flying azimuth angle of the aircraft (20) when the pointing azimuth angle is not matched with the flying azimuth angle; and
   e2) controlling the aircraft (20) to move toward the moving direction and front the target device (24).

3. The following remote controlling method for aircraft according to claim 2, wherein the pointing signal further comprises a pointing elevation angle;

   the step b) further comprises a step b2) detecting a tilt angle via a gyro module (262) of the remote controlling device (22), and calculating the pointing elevation angle according to the tilt angle;
   the step e1) is configured to determine the moving direction and a destination coordinate according to the following distance (D1-D6), the pointing elevation angle, and an azimuth angle difference between the pointing azimuth angle and the flying azimuth angle;
   the step e2) is configured to controlling the aircraft (20) to move toward the moving direction until reaching the destination coordinate.

4. The following remote controlling method for aircraft according to claim 2, wherein the pointing signal further comprises a pointing elevation angle;

   the step b) further comprises a step b3) detecting a moving vector via an accelerometer module (228) of the remote controlling device (22), calculating the pointing elevation angle according to the moving vector;
   the step e1) is configured to determine the moving direction and a destination coordinate according to the following distance (D1-D6), the pointing elevation angle, and an azimuth angle difference between the pointing azimuth angle and the flying azimuth angle;
   the step e2) is configured to controlling the aircraft (20) to move toward the moving direction until reaching the destination coordinate.

5. The following remote controlling method for aircraft according to one of the claims 2 - 4, wherein the target signal comprises a target coordinate;

   the step e1) comprises:

   e11) retrieving a flying coordinate via a locator (212) of the aircraft (20); and
   e12) determining the moving direction and a destination coordinate according to the target coordinate, the flying coordinate, the pointing azimuth angle and the flying azimuth angle;

   the step e2) is configured to controlling the aircraft (20) to move toward the moving direction until reaching the destination coordinate.

6. The following remote controlling method for aircraft according to one of the preceding claims, wherein the step f) comprises:

   f1) receiving the target signal and recording a receiving time, wherein the target signal instructs a sending time;
   f2) calculating an actual distance between the aircraft (20) and the target device (24) according to the receiving time, the sending time and a signal propagation velocity; and
   f3) controlling the aircraft (20) to approach the target device (24) when the actual distance is greater than the following distance (D1-D6), and controlling the aircraft (20) to keep away the target device (24) when the actual distance is less than the following distance (D1-D6).

7. The following remote controlling method for aircraft according to one of the preceding claims, wherein the target signal comprises a target altitude of the target device (24); the step f) comprises:

> f4) retrieving a flying altitude of the aircraft (20), and calculating an actual vertical distance between the aircraft (20) the target device (24); and
> f5) controlling the aircraft (20) to descend for reducing altitude when the actual vertical distance is greater than a following vertical distance, and controlling the aircraft (20) to climb for increasing altitude when the actual vertical distance is less than the following vertical distance.

8. The following remote controlling method for aircraft according to one of the preceding claims, wherein the following remote controlling method for aircraft further comprises:

> g1) receiving the same target signal via a plurality of transceivers (202,2020,2022) of the aircraft (20) and recording a plurality of receiving time of the plurality of the transceivers (202,2020,2022); and
> g2) controlling the aircraft (20) to wheel around for fronting the target device (24) when a receiving time difference between the plurality of the receiving time is not matched with a default time difference.

9. The following remote controlling method for aircraft according to one of the preceding claims, wherein the following remote controlling method for aircraft comprises:

> h1) recording a flying track of the aircraft (20) based on time-domain during moving;
> h2) loading the flying track when receiving a track-following signal; and
> h3) controlling the aircraft (20) to move along the flying track.

10. The following remote controlling method for aircraft according to one of the preceding claims, wherein the following remote controlling method for aircraft further comprises a step i) determining a plane corresponding to the expectant direction (E1, E2) when receiving a plane-fixed operation signal, and configuring the plane as a movable range of the aircraft (20) for making the aircraft (20) be limited to moving in the plane.

11. The following remote controlling method for aircraft according to one of the preceding claims, wherein the step a) is configured to receiving the pointing operation during a pointing operation button of the remote controlling device (22) being pressed.

12. The following remote controlling method for aircraft according to one of the preceding claims, wherein the following remote controlling method for aircraft further comprises:

> j1) controlling the aircraft (20) to move bias toward a fine-tuning direction according to a fine-tuning operation signal when receiving the fine-tuning operation signal;
> j2) adjusting the following distance (D1-D6) according to a distance-adjusting signal when receiving the distance-adjusting signal from the remote controlling device (22); and
> j3) controlling a camera (214) of the aircraft (20) to start to record video and a flying track of the aircraft (20) based on time-domain.

FIG.1
(Related Art)

FIG.2

EP 3 252 558 A1

```
                          ( start )
                              │
                              ▼
  ┌──────────────────────────────────────────────────┐
  │   receive pointing operation at remote controlling device │ ─── S100
  └──────────────────────────────────────────────────┘
                              │
                              ▼
  ┌──────────────────────────────────────────────────┐
  │               generate pointing signal            │ ─── S102
  └──────────────────────────────────────────────────┘
                              │
                              ▼
  ┌──────────────────────────────────────────────────┐
  │                 send pointing signal              │ ─── S104
  └──────────────────────────────────────────────────┘
                              │
                              ▼
  ┌──────────────────────────────────────────────────┐
  │            send target signal at target device    │ ─── S106
  └──────────────────────────────────────────────────┘
                              │
                              ▼
  ┌──────────────────────────────────────────────────┐
  │     receive pointing signal and target signal at aircraft │ ─── S108
  └──────────────────────────────────────────────────┘
                              │
                              ▼
  ┌──────────────────────────────────────────────────┐
  │             move toward expectant direction        │ ─── S110
  └──────────────────────────────────────────────────┘
                              │
                              ▼
  ┌──────────────────────────────────────────────────┐
  │   keep following distance from target device during moving │ ─── S112
  └──────────────────────────────────────────────────┘
                              │
                              ▼
                          (  end  )
```

FIG.3

FIG.4

EP 3 252 558 A1

```
        ┌─────────────────────────┐
        │          S100           │
        └─────────────────────────┘                    S102
                     │
        ┌ ─ ─ ─ ─ ─ ─│─ ─ ─ ─ ─ ─ ─ ─ ─ ─ ─ ─ ┐
        │            ▼                          │
        │  ┌──────────────────────────────┐     │
        │  │  detect pointing azimuth angle │────┼──  S20
        │  └──────────────────────────────┘     │
        │            │                          │
        │            ▼                          │
        │  ┌──────────────────────────────┐     │
        │  │ calculate pointing elevation angle │──┼──  S22
        │  └──────────────────────────────┘     │
        └ ─ ─ ─ ─ ─ ─│─ ─ ─ ─ ─ ─ ─ ─ ─ ─ ─ ─ ┘
                     │
                     ▼
        ┌─────────────────────────┐
        │          S104           │
        └─────────────────────────┘
```

# FIG.5

```
        ┌─────────────────────────┐
        │          S108           │
        └─────────────────────────┘                    S110
                     │
        ┌ ─ ─ ─ ─ ─ ─│─ ─ ─ ─ ─ ─ ─ ─ ─ ─ ─ ─ ─ ─ ┐
        │            ▼            S24                   │
        │          ◇─────────────────────◇             │
        │   no    ╱   Is pointing          ╲            │
        │ ◄───────  azimuth angle not matched with      │
        │ │       ╲   flying azimuth angle? ╱           │
        │ │        ◇─────────────────────◇             │
        │ │          │ yes                             │
        │ │          ▼                                 │
        │ │  ┌────────────────────────────────────┐    │
        │ │  │ determine moving direction and       │───┼── S26
        │ │  │ destination coordinate               │    │
        │ │  └────────────────────────────────────┘    │
        │ │          │                                 │
        │ │          ▼                                 │
        │ │  ┌────────────────────────────────────┐    │
        │ │  │ move toward moving direction until    │──┼── S28
        │ │  │ reaching destination coordinate       │   │
        │ │  └────────────────────────────────────┘    │
        │ └─────────►│                                 │
        └ ─ ─ ─ ─ ─ ─│─ ─ ─ ─ ─ ─ ─ ─ ─ ─ ─ ─ ─ ─ ┘
                     ▼
        ┌─────────────────────────┐
        │          S112           │
        └─────────────────────────┘
```

# FIG.6

FIG.7

FIG.8

S108

S110

S34

Is pointing
azimuth angle not matched with
flying azimuth angle?

no

yes

determine moving direction and destination coordinate    S36

move toward moving direction until reaching destination coordinate    S38

S112

# FIG.9

FIG.10

```
                    ┌──────────────────┐
                    │      S112        │
                    └──────────────────┘
                             │
                             ▼
        ┌────────────────────────────────────┐
        │ Retrieve target altitude and flying altitude,      ⌐ S50
        │ and calculate actual vertical distance │
        └────────────────────────────────────┘
```

Retrieve target altitude and flying altitude, and calculate actual vertical distance — S50

S52

S56

Is actual vertical distance greater than following vertical distance?

no →

Is actual vertical distance less than following vertical distance?

no

S54

yes

S58

yes

descend for reducing altitude

climb for increasing altitude

end

# FIG.11

```
                    ┌─────────────────┐
                    │      S112       │
                    └─────────────────┘
                             │
                             ▼
        ┌────────────────────────────────────────────┐
        │ receive target signal via a plurality of transceivers │  ── S60
        │ and record a plurality of receiving time     │
        └────────────────────────────────────────────┘
                             │        S62
                             ▼   ╱
                          ╱─────────────╲
                        ╱   Is receiving time difference   ╲      no
                       ╱    not matched with default        ╲────────┐
                        ╲       time difference?            ╱        │
                          ╲─────────────╱                            │
                             │                                       │
                             │ yes        S64                        │
                             ▼      ╱                                │
                    ┌─────────────────┐                             │
                    │  wheel around   │                             │
                    └─────────────────┘                             │
                             │◄───────────────────────────────────┘
                             ▼
                         ( end )
```

# FIG.12

FIG.13

FIG.14

```
                        ( start )
                            |
                            v
        +-------------------------------------+
        |   switch to track-recording mode    |----- S700
        +-------------------------------------+
                            |
            +-------------->|
            |               v
            |   +-------------------------------------+
            |   |         record flying track         |----- S702
            |   +-------------------------------------+
            |               |        S704
            |               v     /
            |            /-----------\
        no  |          /             \
      <-----+--------<   stop recording? >
            |          \             /
            |            \-----------/
            |                 |
            |                yes
            |                 |
            +-------------->  |
            |                 v       S706
            |              /-----------\  /
            |            /    switch to   \
        no  |          /   track-following \
      <-----+--------<       mode?          >
            |            \                 /
            |              \-----------/
                                 |
                                yes
                                 |
                                 v
        +-------------------------------------+
        |          load flying track          |----- S708
        +-------------------------------------+
                            |
                            v
        +-------------------------------------+
        |        move along flying track      |----- S710
        +-------------------------------------+
                            |
                            v
                        ( end )
```

# FIG.15

23

FIG.16

Europäisches
Patentamt

European
Patent Office

Office européen
des brevets

# EUROPEAN SEARCH REPORT

**Application Number**

EP 17 17 4073

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/370250 A1 (BACHRACH ABRAHAM [US] ET AL) 24 December 2015 (2015-12-24) | 1 | INV. G05D1/00 |
| Y | * the whole document * | 2-12 | B64C39/02 |
| Y | US 6 072 571 A (HOULBERG CHRISTIAN L [US]) 6 June 2000 (2000-06-06) * the whole document * | 1-12 | |
| Y | US 2015/116505 A1 (STOUT RICHARD F [US] ET AL) 30 April 2015 (2015-04-30) * the whole document * | 1-12 | |
| Y | WO 2015/014116 A1 (SZ DJI TECHNOLOGY CO LTD [CN]) 5 February 2015 (2015-02-05) * the whole document * | 1-12 | |

TECHNICAL FIELDS
SEARCHED      (IPC)

G05D
B64C

The present search report has been drawn up for all claims

| Place of search | Date of completion of the search | Examiner |
|---|---|---|
| Munich | 12 October 2017 | Lalinde, Rafael |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&  : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 17 4073

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2017

| Patent document cited in search report | | Publication date | Patent family member(s) | | Publication date |
|---|---|---|---|---|---|
| US 2015370250 | A1 | 24-12-2015 | NONE | | |
| US 6072571 | A | 06-06-2000 | NONE | | |
| US 2015116505 | A1 | 30-04-2015 | NONE | | |
| WO 2015014116 | A1 | 05-02-2015 | CN | 103426282 A | 04-12-2013 |
| | | | CN | 105283816 A | 27-01-2016 |
| | | | EP | 2959352 A1 | 30-12-2015 |
| | | | JP | 2017509034 A | 30-03-2017 |
| | | | TW | 201522164 A | 16-06-2015 |
| | | | WO | 2015013979 A1 | 05-02-2015 |
| | | | WO | 2015014116 A1 | 05-02-2015 |

EPO FORM P0459

For more details about this annex : see Official Journal of the European Patent Office, No. 12/82